# EUROPEAN PATENT APPLICATION

(11) **EP 3 979 584 A1**
(43) Date of publication of application: **06.04.2022**
(21) Application number: 20199379.7
(22) Date of filing: 30.09.2020
(51) Int. Cl.: H04L 29/06, G06F 21/55, H04L 29/08

(54) **SECURITY NETWORK OF CONNECTED VEHICLE**

(71) Applicant: Valeo Comfort and Driving Assistance, 94046 Créteil Cedex (FR)
(72) Inventor: CALVEZ, Frederic, 94046 Créteil CEDEX (FR); JOUVRAY, Christophe, 94046 Créteil CEDEX (FR); VENELLE, Benjamin, 94046 Créteil CEDEX (FR)
(74) Representative: Delaval, Guillaume Laurent

(57) **Abstract**

It is provided a computer-implemented method performed by a vehicle comprising a plurality of electronic control units, a telecommunication system comprising a gateway, and a main network connecting the plurality of electronic control units with the telecommunication system. The method comprises detecting a cyberattack on an electronic control unit. The method comprises establishing, by the telecommunication system, a secure connection between the electronic control unit and an operation center. The secure connection is via a security network of the vehicle. The security network is segregated from the main network. The method improves the security of the vehicle.

## Description

### TECHNICAL FIELD

The disclosure relates to the field of security network of vehicle.

### BACKGROUND

A connected vehicle communicates with other systems outside of the vehicle. This allows the vehicle to share internet access, and hence data, with other devices both inside and outside the vehicle. A connected vehicle often comprises electronic control units and a telecommunication system. The electronic control units of the connected vehicle may manage numerous functions of the vehicle such as transmission, brake, general electronic, suspension, navigation or internet access.

One of the main challenges for a connected vehicle is cyber security. Indeed, as more and more functionalities can be controlled by electronic control units, the consequences of vehicle hacking could be disastrous. Functionalities of electronic control units may be protected by a security software. The security software can raise cybersecurity alarms when one electronic control unit is misbehaving. These cybersecurity alarms may be transmitted to an operation center managing a fleet of vehicles. In this context, the operator of the vehicle may wish to investigate the root-cause of those alarms that are being received by the operation center. A classical way to do so is to send a technician to the vehicle and proceed with diagnostic tools. However, such a solution is time consuming, costly and inefficient since the diagnosis must wait for the technician's intervention.

A modern way is to take advantage of the remote connectivity provided by the telecommunication system in the vehicle. By using the remote connectivity, the operation center may be able to perform advanced remote diagnosis on the vehicle. However, in order to do so, certain security properties must be guaranteed: confidentiality and authenticity of the data exchanged between the operation center and the vehicle, security of the vehicle during the remote diagnosis, authorization of the operator within the operation center to access a particular vehicle and traceability of actions performed during a remote diagnosis session.

Moreover, the several electronic control units may be manufactured by different manufacturers. As each manufacturer may be more competent in dealing with piracy, it may be worthwhile to give access to the vehicle to a third party.

In this context, there is a need to improve the security of connected vehicles.

### SUMMARY

It is therefore provided a computer-implemented method performed by a vehicle comprising a plurality of electronic control units, a telecommunication system comprising a gateway, and a main network connecting the plurality of electronic control units with the telecommunication system. The method comprises detecting a cyberattack on an electronic control unit. The method comprises establishing, by the telecommunication system, a secure connection between the electronic control unit and an operation center. The secure connection is via a security network of the vehicle. The security network is segregated from the main network.

The security network may comprise an intrusion detection system. The intrusion detection system may include probes. The detecting of the cyberattack may comprise raising a cybersecurity alarm by a probe. The detecting of the cyberattack may comprise sending the cybersecurity alarm to the gateway.

The detecting of the cyberattack may further comprise, by the intrusion detection system, diagnosing the cybersecurity alarm, and, as a result of the diagnosing, performing the sending of the cybersecurity alarm to the gateway.

The establishing of the secure connection may comprise sending, by the telecommunication system and via the security network, the cybersecurity alarm to the operation center. The establishing of the secure connection may comprise receiving, from the operation center and by the gateway, an access request to the electronic control unit. The establishing of the secure connection may comprise evaluating, by the gateway, that the vehicle is in a safe state. The establishing of the secure connection may comprise providing, by the gateway and to the operation center, the secure connection when the gateway evaluates that the vehicle is in a safe state.

The vehicle may be in a safe state when the vehicle is parked. The vehicle may be in a safe state when an engine of the vehicle is stopped. The vehicle may be in a safe state when at least one brake of the vehicle is activated.

The providing of the secure connection by the gateway and to the operation center may comprise a connection initiation. The connection initiation may include exchanging a secure session key.

It is further provided a computer program comprising instructions for performing the method.

It is further provided a non-transitory data storage medium having recorded thereon the computer program.

It is further provided a vehicle comprising the telecommunication system.

It is further provided a computer-implemented method performed by an operation center in communication with a fleet of vehicles. The computer-implemented method performed by an operation center in communication with a fleet of vehicles may comprise receiving a secure connection to an electronic control unit of a vehicle of the fleet under a cyberattack, and, accessing the electronic control unit to treat the cyberattack.

The computer-implemented method performed by an operation center in communication with a fleet of vehicles may further comprise receiving, from a telecommunication system of the vehicle of the fleet, a cybersecurity alarm, sending, to a gateway of the vehicle, an access request to the electronic control unit, and then, receiving the secure connection.

The computer-implemented method performed by an operation center in communication with a fleet of vehicles may further comprise establishing a connection with a third party. The accessing of the electronic control unit to treat the cyberattack may involve the third party.

It is further provided a computer program comprising instructions for performing the method performed by an operation center in communication with a fleet of vehicles.

It is further provided an operation center comprising a server coupled to a memory. The memory has stored thereon the computer program comprising instructions for performing the method performed by an operation center in communication with a fleet of vehicles.

### BRIEF DESCRIPTION OF THE DRAWINGS

Embodiments of the invention will now be described, by way of non-limiting example, and in reference to the accompanying drawings, where:
- FIG. 1 shows an example architecture for performing the method;
- FIG. 2 shows an example of a security network;
- FIG. 3 shows an example architecture of a vehicle for performing the method;
- FIG. 4 shows an example of a main network;
- FIG. 5 shows an example of a security network segregated from the main network of FIG. 4;
- FIG. 6 and FIG. 7 show examples of the vehicle's gateways;
- FIG. 8 shows an example of an interaction diagram of the establishing of the secure connection;
- FIG. 9 shows an example of a connection initiation including exchanging a secure session key;
- FIG. 10 and FIG. 11 show examples of establishing a secure connection between the electronic control unit and an operation center; and
- FIG. 12-14 show examples of establishing a connection with a third party.

### DETAILED DESCRIPTION

It is provided a computer-implemented method performed by a vehicle. The vehicle comprises a plurality of electronic control units, a telecommunication system that comprises a gateway, and a main network that connects the plurality of electronic control units with the telecommunication system. The method comprises detecting a cyberattack on an electronic control unit. The method comprises establishing, by the telecommunication system, a secure connection between the electronic control unit and an operation center. The secure connection is via a security network of the vehicle. The security network is segregated from the main network.

The vehicle may be a land vehicle. For example, the vehicle may be an automobile, a bus, a truck, or a motorcycle. The vehicle may be a connected vehicle.

The vehicle comprises a plurality of electronic control units and a telecommunication system (sometimes referred to as telecommunication unit TCU). Each electronic control unit (ECU) may be any embedded system in automotive electronics that controls one or more of the electrical systems or subsystems in the vehicle. For instance, each ECU may control a specific electrical system of the vehicle. Types of ECU include Engine Control Module (ECM), Powertrain Control Module (PCM), Transmission Control Module (TCM), Brake Control Module (BCM or EBCM), Central Control Module (CCM), Central Timing Module (CTM), General Electronic Module (GEM), Body Control Module (BCM), Suspension Control Module (SCM), control unit, or control module. The plurality of electronic control units may be referred to as the vehicle's computer. Each ECU may comprise a core (e.g. a microcontroller), a memory (e.g. SRAM, EEPROM or Flash), inputs (e.g. Supply Voltage and Ground, Digital inputs and/or Analog inputs), outputs (e.g. Actuator drivers, H bridge drivers for servomotors, Logic outputs), communication links (e.g. Housing and/or Bus Transceivers, e.g. for K-Line, CAN, Ethernet), an Embedded Software (e.g. Boot Loader, Metadata for ECU and Software Identification, Version Management, Checksums, Functional Software Routines and/or Configuration Data). The plurality of electronic control units may be connected to a domain controller through a non-IP bus (e.g. CAN, or LIN).

The telecommunication system comprises a gateway. The gateway may be a piece of networking hardware used in telecommunications for telecommunications networks. The gateway may be configured to allow data to flow from the telecommunication system to another system outside the vehicle. For instance, the gateway may be configured to connect the telecommunication system with an operation center. The gateway may comprise a functional Access Point Name (functional APN) for the main network and a secure Access Point Name (secure APN) for the security network.

The operation center may be any system mandated to monitor vehicles by collecting cyberattacks. The operation center may be a combination of hardware and software components. The operation center may comprise one or several computer systems connected using a shared internal network. Each computer system of the operation center may comprise a central processing unit (CPU) connected to an internal communication BUS, a random-access memory (RAM) also connected to the BUS, and a haptic device such as a cursor control device, a keyboard or the like. Each computer system may further be provided with a graphical processing unit (GPU) which is associated with a video random access memory connected to the BUS. Each computer system of the operation center may further comprise a mass storage device controllerthat manages accesses to a mass memory device, such as hard drive, and a network adapter that manages accesses to the shared internal network. The operation center may comprise a security information and event management system (SIEM). The SIEM may be software products and services that combine security information management (SIM) and security event management (SEM). The SIEM may provide real-time analysis of cyberattack alarms raised by probes. The operation center and the telecommunication system may also comprise a respective virtual private network (VPN). The respective VPN may extend a private network across a public network and may enable the security network to send and receive data across the shared or public network as if the operation center and the telecommunication system were directly connected to the private network. Applications running across the VPN may therefore benefit from the functionality, security, and management of the security network. An encryption may be part of the VPN connection.

The method comprises detecting a cyberattack on an electronic control unit. The detection of the cyberattack may be a detection of an abnormal activity on the electronic control unit. For instance, the abnormal activity may be an abnormal exchange of data or an abnormal executed protocol.

The cyberattack on the electronic control unit may be any attempt to expose, alter, disable, destroy, steal or gain unauthorized access to or make unauthorized use of an asset of the electronic control unit. The cyberattack may be any type of offensive manoeuvre that targets the electronic control unit. The cyberattack may involve a person or process that attempts to access data, functions or other restricted areas of the system without authorization, potentially with malicious intent on the electronic control unit. For instance, the cyberattack may be part of cyberwarfare or cyberterrorism. The cyberattack may be employed by sovereign states, individuals, groups, society or organizations. The cyberattack may originate from an anonymous source.

The method comprises establishing, by the telecommunication system, a secure connection between the electronic control unit and an operation center. The secure connection is any connection allowing a secure exchange of data between the electronic control unit and the operation center. The secure connection may be a TLS tunnel in which a debug protocol would be encapsulated (such as XCP). The secure connection may also be implemented with VPN with full IP routing. The operation center may run diagnosis through the secure connection. The security network is segregated from the main network. The segregation may include the separation of privileges and the separation of duties to adequately segregate vehicle's functions of the main network and the security network.

The method improves the security of the vehicle. Indeed, the method detects the cyberattack on the electronic control unit which allows preventing potential damage and/or make unauthorized use of the vehicle via the electronic control unit. Preventing a cyberattack secures the vehicle because a cyberattack can expose the vehicle to terrible acts of malevolence such as vehicle control, destroying features such as emergency braking or automatic steering of the vehicle.

The establishment of the secure connection improves the security of the vehicle. Indeed, granting a remote access to the vehicle requires to expose such service on untrusted networks like the Internet. Direct impact involves an increased attack surface and greater cybersecurity risks. Thus, the secure connection allows the operation center to treat safely the cyberattack. The operation center may diagnose the cyberattack via the secure connection. For instance, the operation center may exchange data with the electronic control unit in order to identify the cyberattack. The operation center may also annihilate or delete the cyberattack by providing or launching software operation or treatment on the electronic control unit. The operation center may also diagnose the cyberattack in order to improve the security of future electronic control unit products. For instance, the diagnosis may be used for the manufacture of safer electronic control units in the future.

The security network is segregated from the main network. The segregation of the security network from the main network improves the security of the vehicle. Indeed, the segregation allows preventing the cyberattack from being informed of its detection. It prevents the cyberattack from preventing the secure connection from being established. Without the segregation, an attacker or a malicious vehicle owner could intercept these alerts to prevent any detection of the cyberattack. In such cases, the operation center would be unable to detect the compromised vehicle. Thus, the segregation allows the establishment of the secure connection. The segregation prevents the cyberattack from interfering with this secure connection. Therefore, the segregation improves the security of the vehicle.

The security network may comprise an intrusion detection system. The intrusion detection system may include probes. The detecting of the cyberattack may comprise raising a cybersecurity alarm by a probe. The detecting of the cyberattack may comprise sending the cybersecurity alarm to the gateway. The cybersecurity alarm to the gateway may be sent via the security network.

The probe is a piece of software or hardware and software that can monitor a system for certain events. One or several probes may be installed at key point(s) in the network to monitor the traffic. One or several probes may also be deployed on host(s) to monitor for suspicious activity. The probe may comprise protocols for identifying abnormal activity on exchanged data. For instance, the probe may identify untrusted inputs or outputs. The probe may identify unidentified data. For instance, the probe may identify unidentified data that do not comprise a preliminary identification number and/or a secure key.

Probes are the measurement part of the intrusion detection system. The events they generate from the activities they monitor may be then sent to the intrusion detection system for a higher level of analysis. In other examples, the method may comprise a feedback loop from the intrusion detection system towards the probe, when, after detecting suspicious events, a security analyst may want to gather more information about a specific kind of traffic or activities.

The intrusion detection system may be any system configured to detect intrusion on the telecommunication system. The intrusion detection system may categorize the raised cybersecurity alarm by the probe as abnormal. The root cause of these alarms may be currently unknown. It may be currently unknown if only one electronic control unit or several are affected. The nature of the problem may also be unknown. The intrusion detection system may include probes localized on different parts of the telecommunication system. For instance, the intrusion detection system may include a probe on each electronic control unit of the vehicle.

The cybersecurity alarm may comprise data about the cyberattack. For instance, the cybersecurity alarm may comprise an identifier of the cyberattack. The cybersecurity alarm may comprise data about the abnormal activity related to the cyberattack.

Raising the cybersecurity alarm by the probe and sending the cybersecurity alarm to the gateway improves the security of the vehicle. Indeed, the telecommunication system is therefore informed about the cyberattack on the electronic control unit. The telecommunication system may then choose to treat the cyberattack by executing protocols on the electronic control unit and/or ask for an external help. For instance, the telecommunication system may communicate via the secure connection with the operation center.

The detecting of the cyberattack may further comprise, by the intrusion detection system, diagnosing the cybersecurity alarm, and, as a result of the diagnosing, performing the sending of the cybersecurity alarm to the gateway.

The diagnosing the cybersecurity alarm may be performed by executing predetermined protocols on the infected electronic control unit. For instance, the diagnosing may comprise an identification of the cyberattack. The diagnosis may comprise executing one or more treatment protocols based on the identified cyberattack. The one or more treatment protocols may annihilate and/or delete the cyberattack. The diagnosis may comprise determining that the one or more treatment protocols are not sufficient to annihilate and/or delete the cyberattack. As a result of the diagnosing, the detecting of the cyberattack further comprises the sending of the cybersecurity alarm to the gateway. For instance, the detecting of the cyberattack may further comprise the sending of the cybersecurity alarm to the gateway when the telecommunication system asks for an external help. The telecommunication system may ask for an external help when the one or more treatment protocols are not sufficient to annihilate and/or delete the cyberattack. The sending of the cybersecurity alarm may comprise sending collected information about the cyberattack during the diagnosis.

Diagnosing the cybersecurity alarm and performing the sending of the cybersecurity alarm to the gateway as a result of the diagnosing improves the security of the vehicle. Indeed, the diagnosing allows identifying the cyberattack and collecting information about the cyberattack. The collection of information about the cyberattack allows better preventing and/or treating the cyberattack. Furthermore, the diagnosing allows directly treating the cyberattack on the vehicle, without outside help. The diagnosis may quickly annihilate the cyberattack and/or prevent damage from the cyberattack. The diagnosis may identify the cause for the cybersecurity alarm and characterize the maliciousness of it. For instance, it may simply be a false positive, triggered by a faulty electronic control unit showing a yet-unseen behavior. In this case, the vehicle may treat the cyberattack alone. The cybersecurity alarm is not sent to the gateway because the vehicle treats alone the cybersecurity alarm.

Alternatively, the vehicle may require an assistance to treat the cyberattack alarm (e.g. by requesting help from the operation center). Indeed, the electronic control unit and the telecommunication system may not be enough to obtain a clear picture of the situation. To remedy this situation, the method in this case establishes a secure between the electronic control unit and the operation center, for example in order to run custom diagnostic tools. The method thus performs the sending of the cybersecurity alarm to the gateway in order to ask help from the operation center. Therefore, performing, as a result of the diagnosing, the sending of the cybersecurity alarm to the gateway improves the security of the vehicle.

Furthermore, sending of the cybersecurity alarm to the gateway as a result of the diagnosing improves the efficiency of the operation center. Indeed, the operation center may be mandated (or configured) to monitor a fleet of vehicles. Therefore, sending all cybersecurity alarms of the fleet without diagnosing may be inefficiently treated by the operation center. For instance, the operation center may be unable to treat, in the same time, security alarms sent by each vehicle of the fleet simultaneously or within a short period of time. Performing the diagnosing prior to the sending of the cybersecurity alarm to the gateway allows preventing such a situation. The operation center only receives cybersecurity alarms from vehicles requiring an outside help. This feature improves the efficiency of the operation center because the operation center may manage a large fleet of vehicles. The operation center is not cluttered by unnecessary numerous receptions of cybersecurity alarm.

Establishing of the secure connection may comprise sending, by the telecommunication system and via the security network, the cybersecurity alarm to the operation center. The establishing of the secure connection may comprise receiving, from the operation center and by the gateway, an access request to the electronic control unit. The establishing of the secure connection may comprise evaluating, by the gateway, that the vehicle is in a safe state. The establishing of the secure connection may comprise providing, by the gateway and to the operation center, the secure connection when the gateway evaluates that the vehicle is in a safe state.

The vehicle may be in a safe state when providing the secure connection does not compromise the security of the vehicle. The vehicle may be in a safe state when the vehicle is parked. The vehicle may be in a safe state when an engine of the vehicle is stopped. The vehicle may be in a safe state when at least one brake of the vehicle is activated.

Providing the secure connection when the gateway evaluates that the vehicle is in a safe state improves the security of the vehicle. Indeed, the evaluation that the vehicle is in a safe state prevents the establishment of the secure connection when the vehicle is not in condition to receive help from the operation center. Enabling the operation center to interact remotely with a faulty or compromised vehicle may trigger unpredictable behavior of the vehicle's information system, especially if some functions are disabled and/or were altered. Thus, the secure connection is only performed when the vehicle can receive diagnosis and/or treatment without compromising the security of the vehicle. Therefore, providing the secure connection when the vehicle is in safe state improves the security of the vehicle.

The providing of the secure connection by the gateway and to the operation center may comprise a connection initiation. The connection initiation may include exchanging a secure session key.

The secure session key may be a single-use symmetric key. The secure session key may be used for encrypting the data exchanged on the secure connection. The session key may be chosen so that it cannot be predicted by an attacker. For instance, the session keys may be selected randomly.

Exchanging a secure session key improves the security of the vehicle. Indeed, the secure session key secures the connection between the gateway and to the operation center. The secure session key prevents the use of the secure connection by another system external to the vehicle. For instance, the secure session key prevents the use of the secure connection by the cyberattack or the perpetrator of the cyberattack. Therefore, the secure session key improves the security of the connection.

It is further provided a computer program comprising instructions for performing the method.

The computer program may comprise instructions executable by the vehicle. The instructions comprise means for causing the vehicle to perform the method. The program may be recordable on any data storage medium, including a memory of the vehicle. The program may for example be implemented in digital electronic circuitry, or in computer hardware, firmware, software, or in combinations of them. The program may be implemented as an apparatus, for example a product tangibly embodied in a machine-readable storage device for execution by a programmable processor. The application program may be implemented in a high-level procedural or object-oriented programming language, or in assembly or machine language if desired. In any case, the language may be a compiled or interpreted language. The program may be a full installation program or an update program. Application of the program on the vehicle results in any case in instructions for performing the method.

It is further provided a non-transitory data storage medium having recorded thereon the computer program. The non-transitory data storage medium may be any hardware adapted for such storage.

It is further provided a vehicle comprising the telecommunication system.

It is further provided a computer-implemented method performed by an operation center in communication with a fleet of vehicles. The computer-implemented method performed by an operation center in communication with a fleet of vehicles may comprise receiving a secure connection to an electronic control unit of a vehicle of the fleet under a cyberattack, and, accessing the electronic control unit to treat the cyberattack.

Receiving the secure connection and accessing the electronic control unit to treat the cyberattack improves the security of the vehicle. Indeed, the operation center may operate on the vehicle to treat the cyberattack remotely via the secure connection. Therefore, the operation center treats cyberattacks more efficiently.

The computer-implemented method performed by an operation center in communication with a fleet of vehicles may further comprise receiving, from a telecommunication system of the vehicle of the fleet, a cybersecurity alarm, sending, to a gateway of the vehicle, an access request to the electronic control unit, and then, receiving the secure connection.

Receiving the secure connection from the telecommunication system of the vehicle improves the security of the vehicle. Indeed, the vehicle may send the secure connection only when the vehicle is in a safe state. Thus, receiving the secure connection from the telecommunication system prevents the occurrence of potential risks and/or damage induced by the operation performed on the secure connection if the vehicle is not in safe state. For instance, the establishment of the secure connection when the vehicle is parked prevent the deterioration of essential functionalities of the vehicle (e.g. automatic driving) when the vehicle is in motion.

The computer-implemented method performed by an operation center in communication with a fleet of vehicles may further comprise establishing a connection with a third party. The accessing of the electronic control unit to treat the cyberattack may involve the third party.

Establishing the connection with the third party improves the security of the vehicle. Indeed, the third party may be a person more capable person to deal with the cyberattack than the operations center. This situation can often happen because electronic control units on the same vehicle often come from different manufacturers. The third party may access the electronic control unit to treat the cyberattack and provide specific protocols and/or diagnosis. For instance, the third party may be the manufacturer of the misbehaving electronic control unit. The manufacturer may be more aware of potential cyberattacks and potential treatments. The operation center may have run deep diagnosis and concluded that the help of the third party is required. The establishment of the connection with the third party therefore improves the treatment of the cyberattack. For instance, after running diagnosis through the secure connection, the electronic control unit may conclude that the problem is more complicated than first thought and may decide to involve the manufacturer that provided the electronic control units involved in this domain. The manufacturer (i.e. the third party) that provided the electronic control units involved in this domain may therefore access the electronic control unit using the established connection.

It is further provided a computer program comprising instructions for performing the method performed by an operation center in communication with a fleet of vehicles.

It is further provided an operation center comprising a server coupled to a memory. The memory has stored thereon the computer program comprising instructions for performing the method performed by an operation center in communication with a fleet of vehicles.

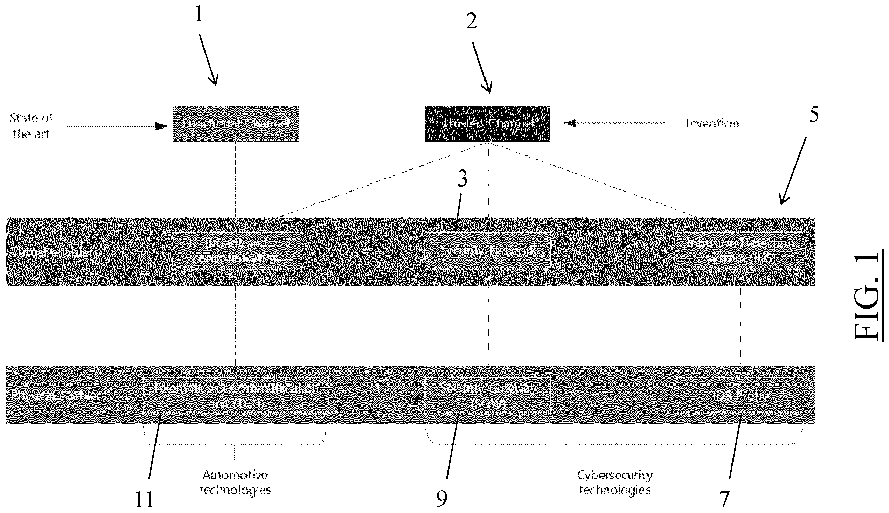

Examples of the method are now described in reference to FIG. 1-14.

FIG. 1 shows an example architecture for performing the method. A vehicle comprises a plurality of electronic control units. The vehicle comprises a telecommunication system 11 comprising a gateway 9, and a main network 1 connecting the plurality of electronic control units with the telecommunication system 11. The method comprises detecting a cyberattack on an electronic control unit and establishing, by the telecommunication system 11, a secure connection 2 between the electronic control unit and an operation center. The secure connection 2 is via a security network 3 of the vehicle. The security network 3 is segregated from the main network 1. The security network 3 comprises an intrusion detection system 5 including probes 7. The detecting of the cyberattack comprises raising a cybersecurity alarm by a probe 7 and sending the cybersecurity alarm to the gateway 9.

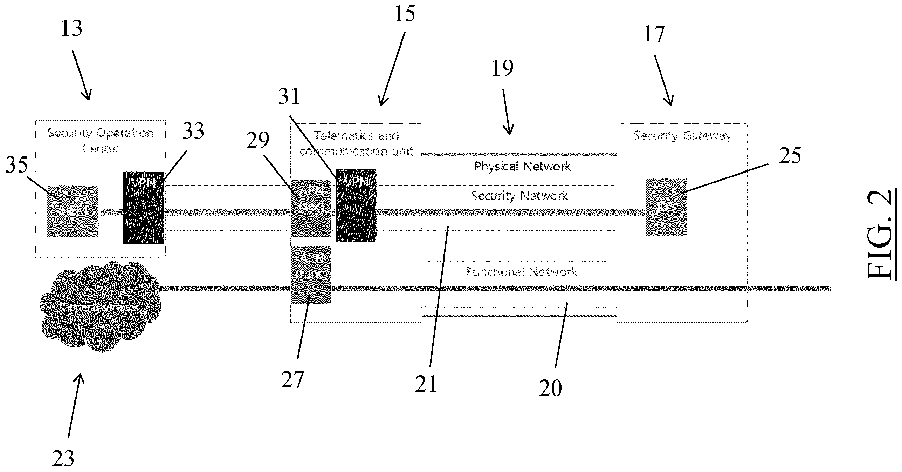

FIG. 2 shows an example of a security network 21 segregated from the main network 20 according to the method. The security network 21 comprises an intrusion detection system 25 including probes. The telecommunication system 15 comprises a gateway 17. The gateway 17 comprise a functional Access Point Name (functional APN) 27 for the main network 20 and a secure Access Point Name (secure APN) 29 for the security network 21. The functional APN 27 is configured to allow data to flow from the telecommunication system 15 to general services 23 through the main network 20. The secure APN 27 is configured to allow data to flow from the telecommunication system 15 to an operation center 13 through the main network 20. The operation center 13 comprises a security information and event management (SIEM). The operation center 13 comprises a virtual private network (VPN) 33. The telecommunication system 15 comprises a virtual private network (VPN) 31. The VPN 33 of the operation center 13 and the VPN 31 of the telecommunication system 15 extend the private network 21 across a public network and enable the security network to send and receive data across the shared or public network as if the operation center 13 and the telecommunication system 15 were directly connected to the private network 21. The telecommunication system 15 comprises a physical network 19 which comprises both the main network 20 and the security network 21.

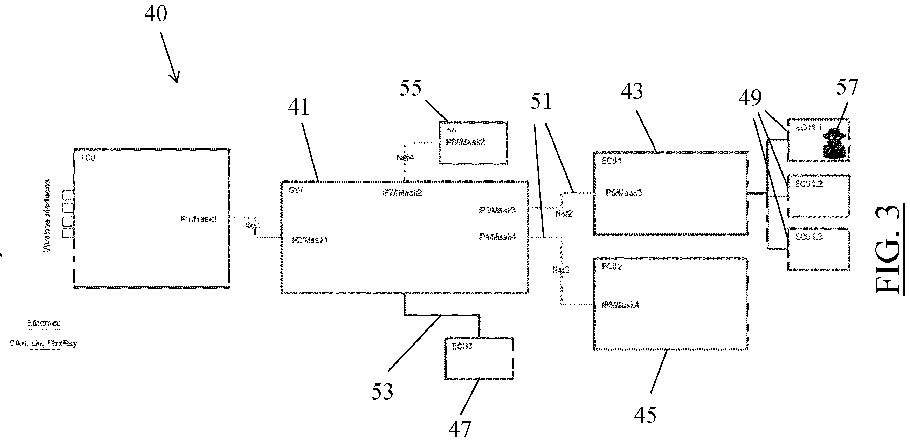

FIG. 3 shows an example architecture of a vehicle for performing the method. The vehicle comprises a telecommunication system 40 comprising a gateway 41. The vehicle comprises three electronic control units 43, 45, 47. The gateway 41 interconnects the three electronic control units 43, 45, 47 and the telecommunication system 40. Two electronic control units 43, 45 are two domain controllers. The two electronic control units 43, 45 connect to the gateway 41 through Ethernet bus 51. One of the two electronic control units 43, 45 (the electronic control unit 43) comprise three sub-components 49. The sub-components 49 are low-complexity electronic control units connected to the parent electronic control unit 43 through a respective automotive bus CAN. One of the electronic control units (the electronic control unit 47) is a regular electronic control unit connected directly to the gateway 41 through a CAN bus 53. The telecommunication system 47 is responsible for managing the remote connectivity. The vehicle comprises an in-vehicle infotainment 51 (IVI). The in-vehicle infotainment is a central screen. One of the sub-components 49 of the electronic control unit 43 (the electronic control unit ECU 1.1) is misbehaving. The electronic control unit ECU 1.1 has been compromised by a cyberattack 57.

The vehicle is secured by design regardless of the physical topology of its information system. Indeed, the vehicle's architecture enforces core cybersecurity principles - such as the separation of privileges and the separation of duties - to adequately segregate vehicle's functions and networks. The method provides a physical and logical architecture that does not degrade the functional properties of the main network, but also combines several layers of security mechanisms to enforce the cybersecurity principles.

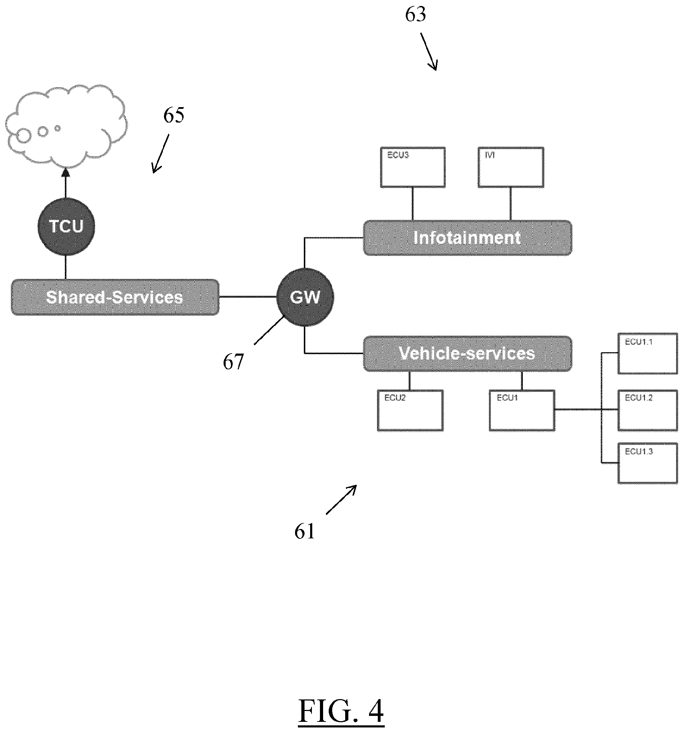

Interconnecting vehicle services by virtual networks makes original equipment manufacturers free to wire the vehicle however needed and independently from the logical architecture. In the example of a main network FIG. 4, the main network comprises three virtual sub-networks (VLANs): a network for core vehicle services 61 that gathers pure automotive functions such as powertrain and chassis, a network for infotainment services 63, and a non-privileged network dedicated to services shared by many vehicle's functions 65. A VLAN is a logical partition of a network into a smaller sub-network. Most of VLAN implementations use the IEEE 802.1Q standard. In the example, all those VLANs are interconnected via an automotive Ethernet backbone, either BroadR-Reach or HDBase-T.

Vehicle core-services 61 are hosted on a dedicated VLAN on the Ethernet backbone. This VLAN 61 has its own filtering rules enforced by a vehicle's central gateway 67 (GW). The gateway 67 isolates vehicle commands from other network traffic while exploiting the same backbone. Each core function relies on different wires and fieldbuses to interconnect a set of electronic control units or even several electronic control unit subnetworks. The fieldbuses may be CAN, Flexray or MOST.

Vehicle infotainment services 63 are also hosted on a dedicated VLAN on the vehicle backbone and have specific filtering and isolation rules. For instance, this VLAN 63 is suited to setup an application server that would host driver/passenger apps as an Android device would do. Authorized user applications may have access to infotainment devices to further tune user on-board experience.

Vehicle shared-services 65 is a dedicated VLAN to host vehicle functions shared by many electronic control units and that do not fit into previously defined VLANs. For instance, vehicle's Event Data Recorder (EDR) or the onboard update repository (required by the OTA function) fall into this VLAN. In practice, the vehicle's TCU may provide a Wide Area Network access (WAN) and an interface to the vehicle's Personal Area Network (PAN) by Wifi and/or Bluetooth.

Vehicle management services VLAN can also be considered to gather functions related to the vehicle management, electronic control units software updates and, diagnosis and monitoring. Original equipment manufacturers currently dedicate this VLAN to the OBD plug only. This VLAN shall be augmented with additional features such as on-board security and privacy related policies to drive vehicle features.

The example of the main network of FIG. 4 depicts two defensive areas with their own trust boundary gateway. Firstly, the shared-services are accessible either through the telecommunication system or the gateway 67. Secondly, other domains are restricted to solely authorized electronic control units thanks to the vehicle's gateway 67. Consequently, a remote attacker must bypass these two security gateways to reach safety-critical electronic control units such as the Electronic Stability Program (ESP).

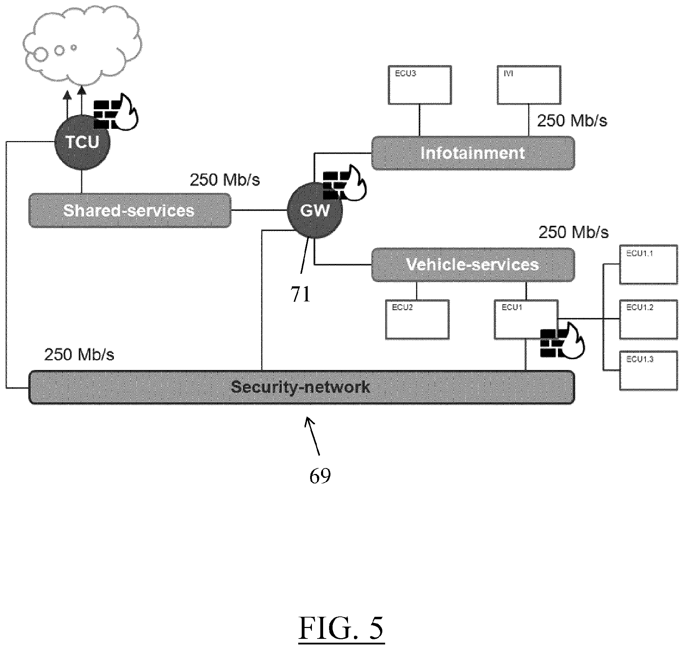

Additionally, the example of the main network of FIG. 4 makes the vehicle's gateway 67 and its telecommunication system the preferred places to detect unauthorized trust boundary crossing as to enforce an appropriate cybersecurity response. The segregation of the security network from the main network allows preventing the attacker to be aware of being monitored. Thus, the attacker is not able to interfere with the cybersecurity enablers such as the vehicle's policies (routing, filtering, QoS...) or its protection devices (firewalls, cryptographic vaults...). The security network is dedicated to cybersecurity which can either be fully wired or implemented as a virtual LAN (as in the example given in FIG. 5).

Referring now to FIG. 5, the security network 69 VLAN gathers functions related to the vehicle cybersecurity, including at least probes from an Intrusion Detection System (IDS) and firewalling management interfaces. This security network 67 main purpose is to isolate the cybersecurity functions from vehicle's main functions, that is, firstly, to prevent any interference with the vehicle's cybersecurity from one or more compromised electronic control unit, and, secondly, to prevent any impact on the vehicle's functional when the cybersecurity goes wrong.

The security network 69 offers a dedicated connectivity between the vehicle's gateway 71, its TCU and its various domain controllers. The security network 69 shall be tamper-proof and invisible regarding these electronic control units. Consequently, both the telecommunication system, the central gateway 71 and the domain controllers shall fulfill these requirements by enforcing the appropriate cybersecurity mechanisms.

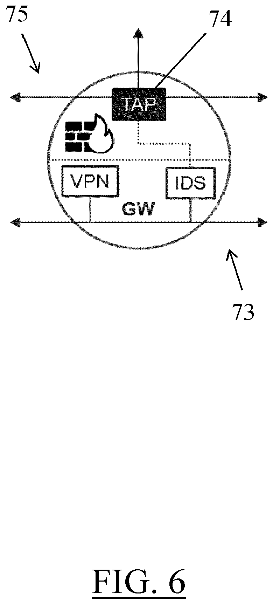

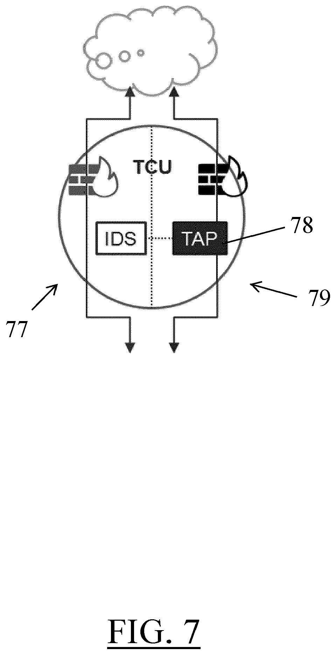

FIG. 6 and FIG. 7 show examples of the vehicle's gateways where cybersecurity functions 73, 77 are segregated from the vehicle functions 75, 79. The Intrusion Detection System monitors the network activity from the security domain thanks to a TAP driver 74, 78 that silently probes the network traffic. In case of a faulty Intrusion Detection System, the TAP driver 74, 78 will prevent any traffic injection. On the opposite, the TAP driver 74, 78 is fully transparent for the main network link so that an attacker will never notice it.

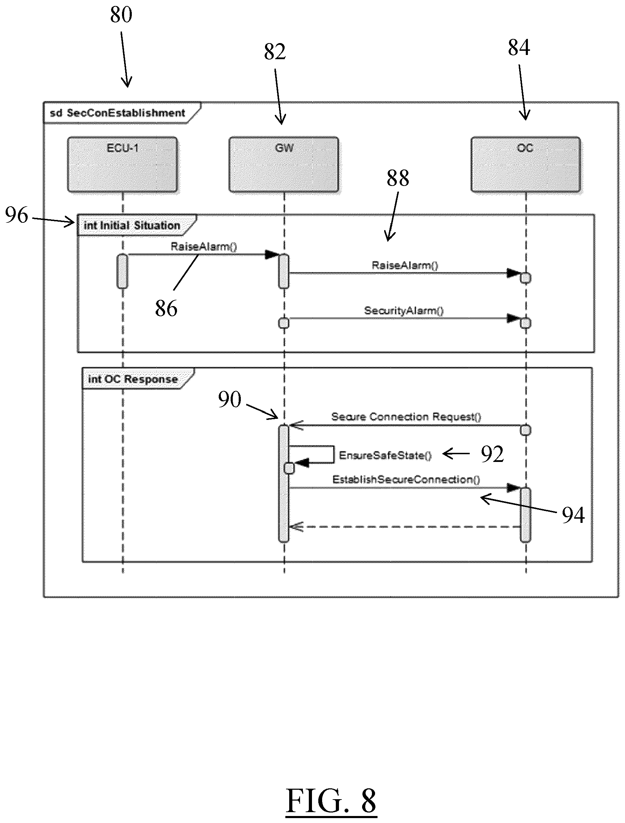

FIG. 8 shows an example of an interaction diagram of the establishing of the secure connection. The interaction diagram shows the process of the secure connection establishment between the operation center and the vehicle. In this example, the initial situation may or may not happen. This example illustrates the establishment of a secure connection based on the raising of a cybersecurity alarm. However, the reason to establish the secure connection may be different. In this example, the method comprises detecting of the cyberattack comprising raising a cybersecurity alarm 86 by a probe on an electronic control unit 80 and sending the cybersecurity alarm 86 to the gateway 82. The establishing of the secure connection comprises sending 88, by the gateway 82 of the telecommunication system and via the security network, the cybersecurity alarm 86 to the operation center 84. The establishing of the secure connection comprises receiving 90, from the operation center 84 and by the gateway 82, an access request to the electronic control unit. The establishing of the secure connection comprises evaluating 92, by the gateway 82, that the vehicle is in a safe state. The establishing of the secure connection comprises providing 94, by the gateway 82 and to the operation center 84, the secure connection when the gateway 82 evaluates that the vehicle is in a safe state.

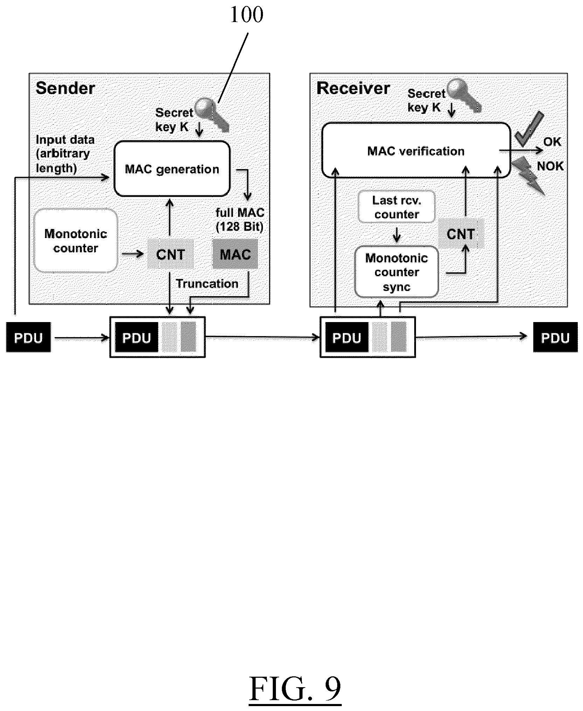

The secure connection is requested by the fleet operator of the operation center 84. This request is made through an already established secure channel between the vehicle and the backend. When the gateway 82 receives the order 90, it first ensures that the vehicle is in a pre-defined safe state 92 before allowing the connection to be established 94. This could include for example ensuring that the engine is stopped or that the brakes are activated. The secure connection dedicated to secure operations is then initiated by the vehicle 94. During the connection initiation, the vehicle and the operation center exchange necessary information to ensure authenticity of the peers and negotiate a secure session key so that the data exchanged over the connection remains confidential, for instance with the example of exchanging a secure session key of FIG. 9.

FIG. 9 shows an example of a connection initiation including exchanging a secure session key 100. The connection initiation uses the Secure Onboard Communication technology (AUTOSAR SecOC). The SecOC technology allows for authentication of Controller Area Network (CAN) frames on the bus. The CAN messages are extended to include a signature (which size can vary, by configuration, depending on the desired level of robustness against spoofing and tampering attacks. FIG. 9 shows how the SecOC mechanism works.

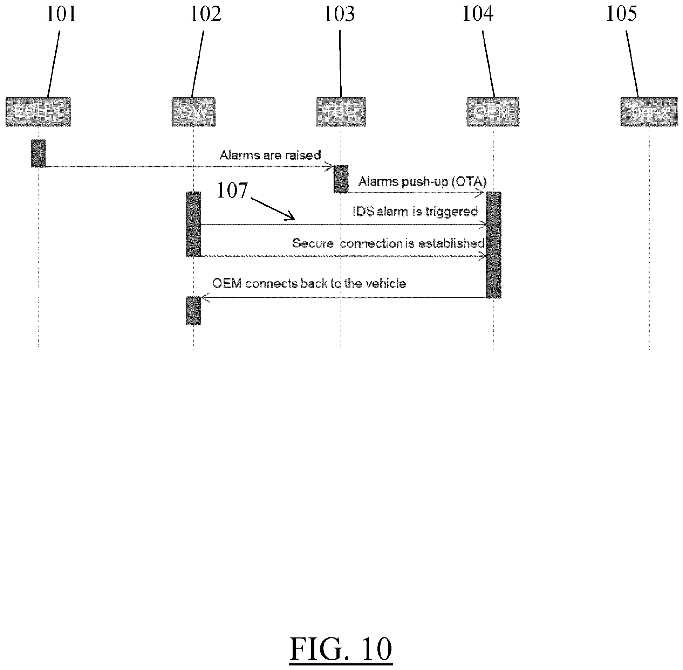

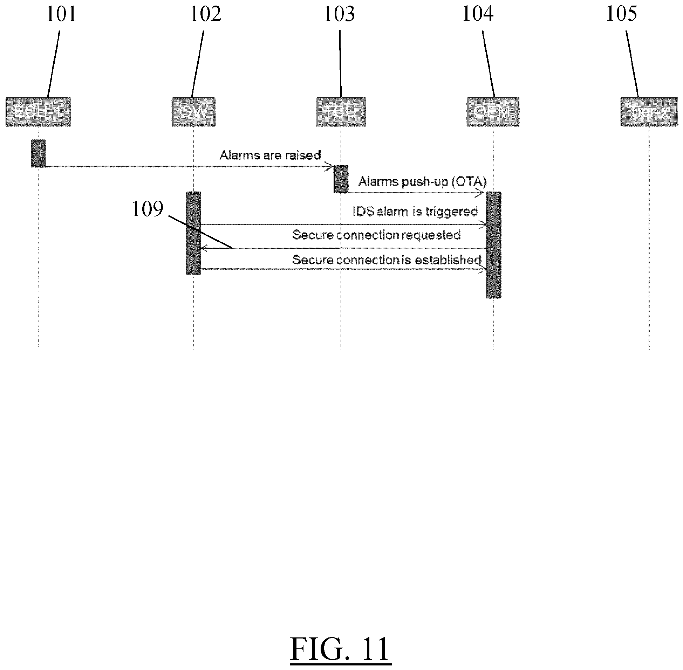

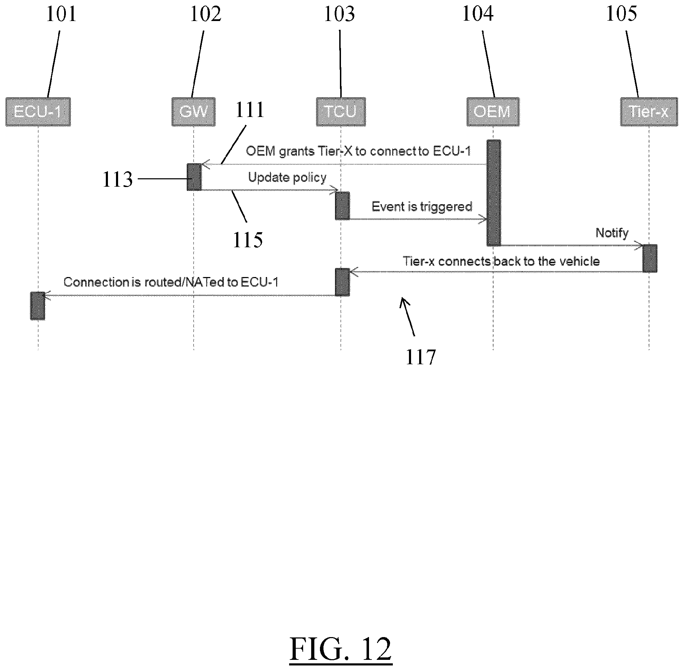

FIG. 10 and FIG. 11 show examples of establishing a secure connection between the electronic control unit and an operation center. FIG. 12-14 show examples of establishing a connection with a third party. In all examples of FIG. 10-14, the electronic control unit 101 (ECU-1) is a faulty domain controller on which the operation center 104 wishes to connect. The electronic control unit 101, the gateway 102 and the telecommunication system 103 are located in the vehicle. The operation center 104 is Original Equipment Manufacturer (OEM) backend servers. The operation center 104 may be remotely reachable by the vehicle. The operation center 104 may be hosted on the internet, or accessible through a dedicated telecom infrastructure for example (such as a dedicated APN on a cellular network). The third party 105 (Tier-X) is a party to which the operation center 104 wishes to delegate the remote connection for further diagnosis. For instance, the third party may be the manufacturer of the electronic control unit 101.

FIG. 10 shows a first example of establishing a secure connection between the electronic control unit 101 and the operation center 104. In this first example, the method comprises automatically establishing the secure connection based on a security event occurrence 107 from the vehicle to the operation center 104. The advantage of this first example is that the connection is initiated by the vehicle, meaning there are no open services left open for the public (i.e. low attack surface). The method may also comprise an authentication of parties (using a PKI or Kerberos for example), or DNSSec (but with an overly complex configuration phase). Kerberos is a computer network authentication protocol that works on the basis of tickets to allow nodes communicating over a non-secure network to prove their identity to one another in a secure manner. It is an implementation of the Needham-Schroeder protocol that allows authentication and symmetric key exchange over an insecure network. DNSSEC stands for Domain Name System SECurity extensions. It aims at providing data origin authentication and data integrity to the original DNS protocol. It does not provide confidentiality of the requests. The authentication of parties improves the security of the vehicle. Indeed, one of the main threats would lie in attacks such as domain name services hijacking or BGP routes hijacking meant to conduct a man-in-the-middle attack on the connection. The authentication of parties solves problem related to such attacks because the strong authentication of parties transforms those attacks in denial of services (DoS) and protects against information disclosure.

FIG. 11 shows a second example of establishing a secure connection between the electronic control unit 101 and the operation center 104. In this second example, instead of automatically establishing a secure connection to the operation center 104, the gateway 102 waits for such an order to be issued 109 from the operation center 104. This order would have to be triggered by a security analyst with appropriate authorizations, and be logged appropriately for legal reasons. Alternatively, this solution could be adapted so that instead of originating from the gateway 102, the secure connection would come directly from the domain controller (that is, the electronic control unit 101 ECU-1 in this case). This second example allows further reducing the risk of negative side effects of such an intervention.

The authentication of the request for the establishment of the secure connection, prior to establishing the secure connection to the operation center, can rely on Kerberos, thanks to the trust relationship established between the vehicle's embedded Kerberos realm and the operation center realm. The authorization stage may occur in the service responsible for establishing the secure connection.

Given the highly sensitive nature of such highly privileged remote connections, traceability may be an interesting property which the method may provide. The traceability may be implemented both at the operation center backend's level and at the vehicle level. Given the scarce nature of resources in the embedded world, the method may comprise recording things beyond connection events. the method may also comprise recording the commands sent to the vehicle through that secure connection.

The gateway and the telecommunication system may comprise firewalls. The dynamic nature of the architecture's firewall policies of the method is leveraged. The method may comprise, once the service managing the secure connection has authorized the connection request, and prior to establishing said secure connection, sending an order through the security network to update both the gateway and the telecommunication system firewall policies to allow for such outgoing traffic to go through.

FIG. 12-14 show examples of establishing a connection with a third party. In these examples, the operation center 104 has ran deep diagnosis and concluded the help of one or several Tiers (i.e. the third party 105) is needed. To do so, the method comprises delegating access to the secure connection.

FIG. 12 shows a first example of establishing a connection with the third party 105. In this first example, the operation center 104 sends an order 111 to the vehicle (through the security network) to temporarily update the access policy in order to allow for remote connection from outside of the operation center 104 network. Once the policy is updated 113, the vehicle notifies 115 the third party 105, which in turn initiates a connection 117. In this example, the connection is direct between the third party 105 and the vehicle, with no further control or supervision from the operation center 104.

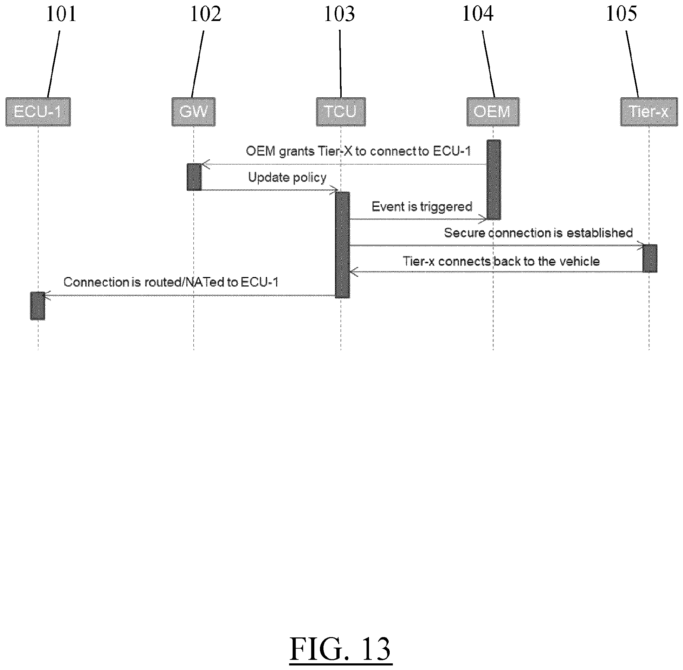

FIG. 13 shows a second example of establishing a connection with the third party 105. In this second example, the operation center 104 might be able to connect back even in the case of NAT mechanisms. Indeed, there are some regions in which the IPv4 exhaustion has caused network operators to implement NAT mechanisms, effectively breaking the possibility to establish a connection from the backend to the vehicle.

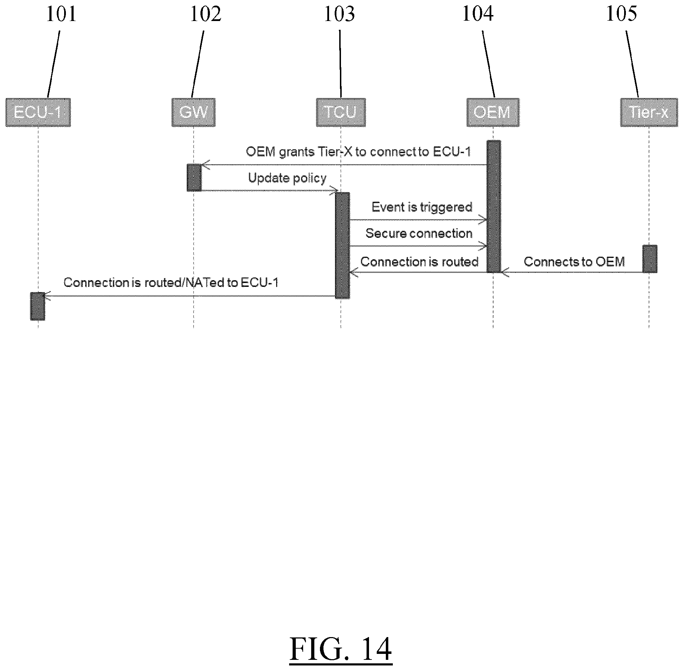

FIG. 14 shows a third example of establishing a connection with the third party 105. In this third example, the method comprises recording all traffic that goes through the secure connection to ensure the traceability. Indeed, this recording is possible because the secure connection established between the telecommunication system 103 and the operation center 104 is decrypted by the operation center 104. The method further comprises establishing a second secure connection between the third party 105 and the operation center 104. The second secure connection is also deciphered at the operation center 104 backend's. The packet forwarding between the two is handled in clear by the operation center 104, which allows for recording of the associated traffic. By passing through the OEM's infrastructure, the vehicle is accessible from the third party 105 (Tier-X) network.

## Claims

1. A computer-implemented method performed by a vehicle comprising a plurality of electronic control units, a telecommunication system comprising a gateway, and a main network connecting the plurality of electronic control units with the telecommunication system, the method comprising:
- detecting a cyberattack on an electronic control unit; and
- establishing, by the telecommunication system, a secure connection between the electronic control unit and an operation center, the secure connection being via a security network of the vehicle, the security network being segregated from the main network.

2. The method of claim 1, wherein the security network comprises an intrusion detection system including probes, the detecting of the cyberattack comprising:
- raising a cybersecurity alarm by a probe; and
- sending the cybersecurity alarm to the gateway.

3. The method of claim 2, wherein the detecting of the cyberattack further comprises, by the intrusion detection system:
- diagnosing the cybersecurity alarm; and
- as a result of the diagnosing, performing the sending of the cybersecurity alarm to the gateway.

4. The method of claim 2 or 3, wherein the establishing of the secure connection comprises:
- sending, by the telecommunication system and via the security network, the cybersecurity alarm to the operation center;
- receiving, from the operation center and by the gateway, an access request to the electronic control unit;
- evaluating, by the gateway, that the vehicle is in a safe state; and
- providing, by the gateway and to the operation center, the secure connection when the gateway evaluates that the vehicle is in a safe state.

5. The method of claim 4, wherein the vehicle is in a safe state when:
- the vehicle is parked,
- an engine of the vehicle is stopped, and/or
- at least one brake of the vehicle is activated.

6. The method of claim 4 or 5, wherein the providing of the secure connection by the gateway and to the operation center comprises a connection initiation, the connection initiation including exchanging a secure session key.

7. A computer program comprising instructions for performing the method of any one of claims 1 to 6.

8. A non-transitory data storage medium having stored thereon the computer program of claim 7.

9. A telecommunication system comprising a gateway and a memory having stored thereon the computer program of claim 7.

10. A vehicle comprising the telecommunication system of claim 9.

11. A computer-implemented method performed by an operation center in communication with a fleet of vehicles, the method comprising:
- receiving a secure connection to an electronic control unit of a vehicle of the fleet under a cyberattack; and
- accessing the electronic control unit to treat the cyberattack.

12. The method of claim 11, wherein the method further comprises:
- receiving, from a telecommunication system of the vehicle of the fleet, a cybersecurity alarm;
- sending, to a gateway of the vehicle, an access request to the electronic control unit; and then
- receiving the secure connection.

13. The method of 11 or 12, wherein the method further comprises establishing a connection with a third party, the accessing of the electronic control unit to treat the cyberattack involving the third party.

14. A computer program comprising instructions for performing the method of any one of claims 11 to 13.

15. An operation center comprising a server coupled to a memory, the memory having stored thereon the computer program of claim 14.
